(19) Europäisches Patentamt
European Patent Office
Office européen des brevets

(11) **EP 1 510 679 B1**

(12) **EUROPEAN PATENT SPECIFICATION**

(45) Date of publication and mention
of the grant of the patent:
**07.11.2018 Bulletin 2018/45**

(51) Int Cl.:
*F02D 41/02* *(2006.01)*    *F02D 41/14* *(2006.01)*
*F01N 3/023* *(2006.01)*

(21) Application number: **04020317.6**

(22) Date of filing: **26.08.2004**

(54) **Excessive sulfur poisoning recovery control method and apparatus for exhaust gas control catalyst**

Verfahren und Vorrichtung zur Schwefelentfernung eines Abgaskatalysators

Méthode et dispositif pour décontaminer un excès de sulfate dans un catalyseur de gaz d'échappement

(84) Designated Contracting States:
**DE ES FR GB IT**

(30) Priority: **29.08.2003 JP 2003306764**

(43) Date of publication of application:
**02.03.2005 Bulletin 2005/09**

(73) Proprietor: **TOYOTA JIDOSHA KABUSHIKI KAISHA**
**Toyota-shi, Aichi-ken, 471-8571 (JP)**

(72) Inventors:
• **Tahara, Jun**
**Toyota-shi,**
**Aichi-ken, 471-8571 (JP)**
• **Sugiyama, Tatsumasa**
**Toyota-shi,**
**Aichi-ken, 471-8571 (JP)**
• **Kobayashi, Nobuki**
**Toyota-shi,**
**Aichi-ken, 471-8571 (JP)**

(74) Representative: **TBK**
**Bavariaring 4-6**
**80336 München (DE)**

(56) References cited:
**EP-A2- 0 862 941     EP-A2- 0 892 158**
**DE-A1- 10 024 845     DE-A1- 19 522 165**

**Description**

BACKGROUND OF THE INVENTION

1. Field of the Invention

The invention relates to an excessive sulfur poisoning recovery control for an exhaust gas control catalyst provided in an exhaust system of an internal combustion engine. Under this control, sulfur poisoning recovery control is executed which releases sulfur components from the exhaust gas control catalyst thereby recovering the exhaust gas control catalyst from the sulfur poisoning through execution of a temperature increase routine and an air-fuel ratio decrease routine with respect to the exhaust gas control catalyst.

2. Description of the Related Art

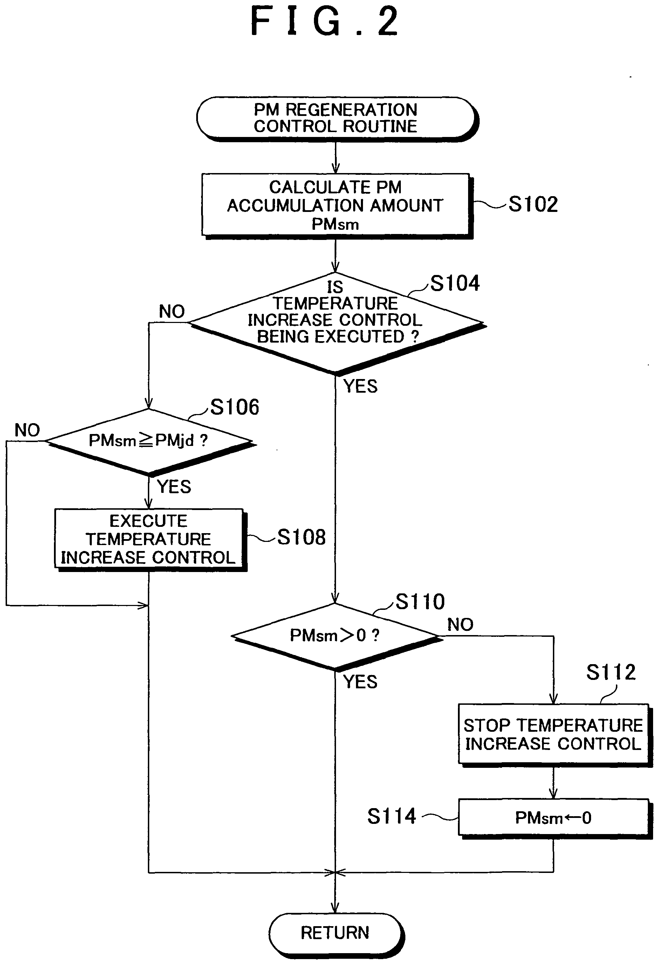

An exhaust gas control catalyst, particularly a NOx storage reduction catalyst, is damaged or poisoned by sulfur components in the fuel. If the extent of the poisoning is great enough, the NOx storage reduction performance becomes impaired. Thus, when a certain amount of sulfur components has built up in the NOx storage reduction catalyst, the temperature of the catalyst is raised by a temperature increase routine and the air-fuel ratio is made the stoichiometric air-fuel ratio or lower by an air-fuel ratio decrease routine so that those components are released from the catalyst (for example, see JP(A) 2001-349230, pages 5 - 7 and FIG. 2).
A further example is given by the patent documentation DE 100 24 845
If the air-fuel ratio is made the stoichiometric air-fuel ratio or lower and the temperature of the catalyst is suddenly increased when the extent of the sulfur poisoning is great, the sulfur components are released suddenly. As a result, a high concentration of hydrogen sulfide is emitted which produces a foul odor. The related art therefore reduces the rate at which the temperature of the catalyst is raised more the greater the extent of the sulfur poisoning, and thus releases the sulfur components gradually in order to avoid increasing the concentration of hydrogen sulfide emitted from the NOx storage reduction catalyst.
If the operating state of the internal combustion engine remains such that sulfur poisoning recovery control can not be executed for an extended period of time, however, the extent of sulfur poisoning of the NOx storage reduction catalyst may become excessive without sulfur poisoning regeneration. In this case, not only do alkaline metals (including alkaline-earth metals and rare-earth metals, in this case) in the NOx storage reduction catalyst become saturated with sulfur components, but deposits of the sulfur components build up on the NOx storage reduction catalyst.
It has been found that if, as in this case, the poisoning sustained by the exhaust gas control catalyst is excessive, the sulfur components accumulated on the exhaust gas control catalyst are not able to be released gradually as desired by the related art, even if the rate of the temperature increase is reduced or the temperature increase is less than it is normally. That is, regardless of the temperature increase or the rate of that temperature increase, when the temperature increases and the air-fuel ratio is reduced during sulfur poisoning recovery, the sulfur components that have accumulated on the exhaust gas control catalyst are released suddenly together with the sulfur components from the alkaline metals. As a result, a high concentration of sulfur components such as sulfur dioxide and hydrogen sulfide are released.
Therefore, if the exhaust gas control catalyst sustains excessive poisoning, the sulfur poisoning recovery control method according to the related art is unable to sufficiently prevent the generation of white smoke and a foul odor and the like that are produced by the emission of a high concentration of sulfur components.

SUMMARY OF THE INVENTION

In view of the foregoing problems, it is thus an object of this invention to prevent the emission of a high concentration of sulfur components when the sulfur poisoning amount of an exhaust gas control catalyst is excessive. The means to achieve this object and the operational effects thereof are as follows.
One aspect of the invention relates to an excessive sulfur poisoning recovery control method for an exhaust gas control catalyst provided in an exhaust system of an internal combustion engine in which the exhaust gas control catalyst is recovered from sulfur poisoning. According to this aspect of the invention, when the sulfur poisoning amount of the exhaust gas control catalyst is excessive, a lean-burn temperature increase routine is executed which increases the temperature of the catalyst with an air-fuel ratio higher than stoichiometric air-fuel ratio so that some sulfur components are released from the exhaust gas control catalyst.
Also, in the foregoing aspect of the invention, the exhaust gas control catalyst may also be recovered from the sulfur poisoning by releasing the sulfur components from the catalyst by means of sulfur poisoning recovery control which executes a temperature increase routine for increasing the temperature of the exhaust gas control catalyst and an air-fuel ratio decrease routine that brings the air-fuel ratio to the stoichiometric air-fuel ratio or lower when the operating state of the internal combustion engine is within a range in which sulfur poisoning recovery control is executed (hereinafter also referred to as "sulfur poisoning recovery control execution range").

When the exhaust gas control catalyst has sustained excessive sulfur poisoning, instead of releasing the sulfur components by combining the temperature increase routine and the air-fuel ratio decrease routine as is done in the sulfur poisoning recovery control, the temperature increase routine is executed for the exhaust gas control catalyst with an air-fuel ratio that is higher than the stoichiometric air-fuel ratio. As a result, mainly just the sulfur components deposited on the exhaust gas control catalyst are released. As a result, because mainly the sulfur components deposited on the exhaust gas control catalyst are released without any sulfur components being released from the alkaline metals, the concentration of released sulfur components is able to be kept down as it is when the air-fuel ratio decrease routine, which reduces the air-fuel ratio to the stoichiometric air-fuel ratio or lower, is executed.

Furthermore, the concentration of the released sulfur components is also able to be kept down because the sulfur components absorbed in the alkaline metals are released from the exhaust gas control catalyst by the sulfur poisoning recovery control that is executed after the excessive amount of sulfur poisoning (hereinafter referred to as "excessive sulfur poisoning amount") has disappeared.

Also, even if the excessive sulfur poisoning amount has not yet completely disappeared during the sulfur poisoning recovery control, the excessive sulfur poisoning amount is able to be kept down by the temperature increase routine being executed when it is determined that the sulfur poisoning amount is excessive. As a result, the concentration of released sulfur components is able to be kept down. It is thus possible to prevent a high concentration of sulfur components from being released when the sulfur poisoning amount of the exhaust gas control catalyst is excessive.

Another aspect of the invention relates to an excessive sulfur poisoning recovery control apparatus in an internal combustion engine provided with an exhaust gas control catalyst in an exhaust system of the internal combustion engine. According to this aspect of the invention, the control apparatus includes excessive sulfur poisoning amount detecting means for detecting an excessive sulfur poisoning amount within the sulfur poisoning amount; and temperature increasing/sulfur component releasing means for releasing excessive sulfur components from the exhaust gas control catalyst by executing a lean-burn temperature increase routine for increasing the temperature of the exhaust gas control catalyst with an air-fuel ratio higher than the stoichiometric air-fuel ratio if the excessive sulfur poisoning amount detected by the excessive sulfur poisoning amount detecting means becomes equal to, or greater than, a reference level.

Further, the control apparatus may also include sulfur poisoning recovering means for recovering the exhaust gas control catalyst from sulfur poisoning by releasing sulfur components from the exhaust gas control catalyst by executing a temperature increase routine for increasing the temperature of the exhaust gas control catalyst and an air-fuel ratio decrease routine for decreasing the air-fuel ratio to the stoichiometric air-fuel ratio or lower when the operating state of the internal combustion engine is in a range within which sulfur poisoning recovery control is executed.

If the excessive sulfur poisoning amount detected by the excessive sulfur poisoning amount detecting means reaches or exceeds the reference level, the temperature increasing/sulfur component releasing means executes the lean-burn temperature increase routine with an air-fuel ratio higher than the stoichiometric air-fuel ratio. This results in the release of the excessive sulfur components in the exhaust gas control catalyst. When the sulfur components are released by executing the lean-burn temperature increase routine, only the accumulated excessive sulfur components are released. The sulfur components absorbed in the alkaline metals, on the other hand, are not released at this time. As a result, it is possible to keep the concentration of the sulfur components that are released down.

Further, the sulfur components absorbed in the alkaline metals are released by the sulfur poisoning recovering means when the sulfur poisoning amount of the exhaust gas control catalyst is no longer excessive. This further contributes to keeping down the concentration of released sulfur components.

Also, even if the excessive sulfur poisoning amount has not completely disappeared during the sulfur poisoning recovery executed by the sulfur poisoning recovering means, the temperature increasing/sulfur component releasing means executes the lean-burn temperature increase routine when the excessive sulfur poisoning amount reaches or exceeds the reference level, which suppresses the excessive sulfur poisoning amount. As a result, the concentration of the released sulfur components can be kept down, making it possible to prevent a high concentration of sulfur components from being released when the sulfur poisoning amount of the exhaust gas control catalyst has become excessive.

In the foregoing aspect of the invention, the temperature increasing/sulfur component releasing means may use as the reference level a level where the sulfur component concentration during release of the sulfur components will not be high.

Setting the reference level to a level where the sulfur component concentration during release of the sulfur components will not be high makes it possible to reliably keep down the concentration of the sulfur components when they are released by the temperature increasing/sulfur component releasing means. Moreover, it is also possible to reliably keep down the concentration of the sulfur components even when the sulfur components are released by the sulfur poisoning recovering means.

Another aspect of the invention relates to an excessive sulfur poisoning recovery control apparatus for an exhaust gas control catalyst in an internal combustion engine provided with an exhaust gas control catalyst in an exhaust system of the internal combustion engine, and fine particle regeneration controlling means for executing a lean-burn temperature increase routine for increasing the temperature of the exhaust gas control catalyst with an air-fuel ratio higher than stoichiometric air-fuel ratio if an accumulation amount of particulate matter in a filter provided in the exhaust system of the internal combustion engine becomes equal to, or greater than, a reference accumulation amount. The control apparatus according to this aspect of the invention includes excessive sulfur poisoning amount detecting means for detecting an excessive sulfur poisoning amount within a sulfur poisoning amount; and temperature increasing/sulfur component releasing means for increasing the frequency with which the lean-burn temperature increase routine is executed based on the excessive sulfur poisoning amount detected by the excessive sulfur poisoning amount detecting means.

The control apparatus according to the foregoing aspect of the invention may also include sulfur poisoning recovering means for recovering the exhaust gas control catalyst from sulfur poisoning by releasing sulfur components from the exhaust gas control catalyst by executing a temperature increase routine for increasing the temperature of the exhaust gas control catalyst and an air-fuel ratio decrease routine for decreasing the air-fuel ratio to the stoichiometric air-fuel ratio or lower when the operating state of the internal combustion engine is in a range within which sulfur poisoning recovery control is executed.

In this case, the temperature increasing/sulfur component releasing means releases the excessive sulfur components from the exhaust gas control catalyst by increasing the frequency with which the lean-burn temperature increase routine is executed by the fine particle regeneration controlling means. Accordingly, instead of the temperature increasing/sulfur component releasing means executing a lean-bum temperature increase routine provided especially for releasing the sulfur components, the fine particle regeneration controlling means may execute a lean-burn temperature increase routine for particulate matter regeneration.

The lean-burn temperature increase routine of the fine particle regeneration controlling means is not restricted to a specific operating range. Therefore, even if the sulfur poisoning is so excessive that the engine operating state does not come into the sulfur poisoning recovery control execution range, the lean-burn temperature increase routine can still be executed by the fine particle regeneration controlling means. Moreover, because the temperature increasing/sulfur component releasing means increases the frequency with which the lean-burn temperature increase routine is executed by the fine particle regeneration controlling means, the lean-burn temperature increase routine is executed by the fine particle regeneration controlling means early on before the degree of excessiveness of the sulfur components becomes large.

The lean-burn temperature increase routine is executed by the fine particle regeneration controlling means in this way so the excessive sulfur components in the exhaust gas control catalyst are released. When the sulfur components are released by executing the lean-burn temperature increase routine, only the accumulated excessive sulfur components are released. The sulfur components absorbed in the alkaline metals, on the other hand, are not released at this time. Further, because the lean-burn temperature increase routine is executed at a high frequency, as described above, it is possible to keep down the concentration of the sulfur components that are released.

Moreover, if the engine is operating in the sulfur poisoning recovery control execution range, the sulfur components absorbed in the alkaline metals are released by the sulfur poisoning recovering means when the sulfur poisoning amount of the exhaust gas control catalysts is no longer excessive. As a result, the concentration of sulfur components that are released can be kept down.

Also, even if the excessive sulfur poisoning amount has not completely disappeared during the sulfur poisoning recovery by the sulfur poisoning recovering means, that excessive sulfur poisoning amount is able to be suppressed because the temperature increasing/sulfur component releasing means increases the frequency with which the lean-burn temperature increase routine is executed based on the excessive sulfur poisoning amount. Accordingly, the concentration of released sulfur components is able to be kept down so that a high concentration of sulfur components is prevented from being released when the sulfur poisoning amount in the exhaust gas control catalyst is excessive.

Further, the temperature increasing/sulfur component releasing means in the foregoing aspect of the invention may also increase the frequency with which the lean-burn temperature increase routine is executed by the fine particle regeneration controlling means by increasing the accumulation amount of the particulate matter based on the excessive sulfur poisoning amount detected by the excessive sulfur poisoning amount detecting means.

By increasing the accumulation amount of the particulate matter by calculation in this way, the fine particle regeneration controlling means regards the amount of particulate matter accumulated on the filter as being equal to, or greater than, the reference accumulation amount early on. Accordingly the fine particle regeneration controlling means executes the lean-burn temperature increase routine early, thereby increasing the frequency with which that routine is executed.

In this way, the frequency with which the lean-burn temperature increase routine is executed can be easily increased by the fine particle regeneration controlling means using the calculation for the particulate matter accumulation amount. Thus, it is possible to prevent a high concentration of sulfur components from being released when the sulfur poisoning amount in the exhaust gas control catalyst is excessive.

Further in the foregoing aspect of the invention, the temperature increasing/sulfur component releasing means may also increase the accumulation amount of the particulate matter according to the amount of particulate matter produced in the internal combustion engine, the sulfur poisoning amount, the exhaust temperature, and the concentration of sulfur components in the fuel.

As a result, the excessiveness of the sulfur poisoning amount can be accurately reflected in the accumulation amount of the particulate matter, which enables the frequency with which the lean-burn temperature increase routine is executed to be effectively increased. This makes it possible to prevent a high concentration of the sulfur components from being released when the sulfur poisoning amount in the exhaust gas control catalyst is excessive, as described above.

Further in the foregoing aspect of the invention, the temperature increasing/sulfur component releasing means may also increase the frequency with which the lean-burn temperature increase routine is executed by the fine particle regeneration controlling means by reducing the reference accumulation amount, which is used to determine whether to execute the lean-burn temperature increase routine, based on the excessive sulfur poisoning amount detected by the excessive sulfur poisoning amount detecting means.

By decreasing the reference accumulation amount in this way, the fine particle regeneration controlling means regards the amount of particulate matter accumulated on the filter as being equal to, or greater than, the reference accumulation amount early on. Accordingly, the fine particle regeneration controlling means executes the lean-burn temperature increase routine early, thereby increasing the frequency with which that routine is executed. This makes it possible to prevent a high concentration of the sulfur components from being released when the sulfur poisoning amount in the exhaust gas control catalyst is excessive, as described above.

Further in the foregoing aspect of the invention, the temperature increasing/sulfur component releasing means may also increase the frequency with which the lean-burn temperature increase routine is executed by the fine particle regeneration controlling means such that the lean-burn temperature increase routine is executed before the sulfur component concentration during release of the sulfur components becomes high.

Increasing the frequency with which the lean-burn temperature increase routine is executed in this way enables the concentration of the sulfur components to be reliably kept down when those sulfur components are released by executing the lean-burn temperature increase routine. Furthermore, it is possible to reliably keep down the concentration of the sulfur components even when those sulfur components are released by the sulfur poisoning recovering means.

BRIEF DESCRIPTION OF THE DRAWINGS

FIG. 1 is a block diagram schematically showing a vehicular diesel engine and a control apparatus according to a first exemplary embodiment of the invention;
FIG. 2 is a flowchart of a PM regeneration control routine executed by an ECU according to the first exemplary embodiment of the invention;
FIG. 3 is an sulfur poisoning coefficient map used in the PM regeneration control routine;
FIG. 4 is an exhaust temperature coefficient map used in the PM regeneration control routine;
FIG. 5 is a contained sulfur coefficient map used in the PM regeneration control routine;
FIG. 6 is a flowchart of a temperature increase control routine executed by the ECU according to the first exemplary embodiment of the invention;
FIG. 7 is a timing chart showing an example of control according to the first exemplary embodiment of the invention;
FIG. 8 is a flowchart of a PM regeneration control routine according to a second exemplary embodiment of the invention;
FIG 9 is a timing chart showing an example of control according to the second exemplary embodiment of the invention;

DETAILED DESCRIPTION OF THE PREFERRED EMBODIMENTS

[First Embodiment]

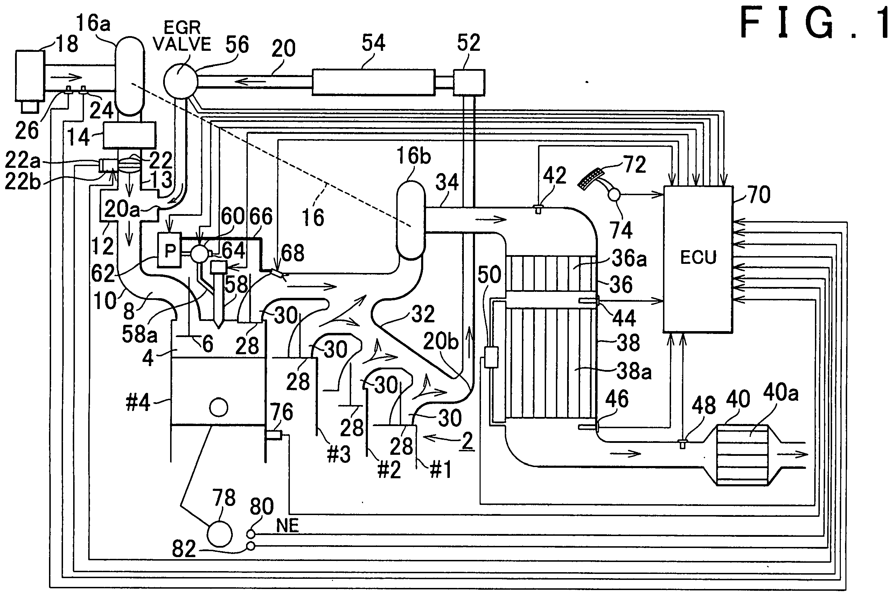

FIG. 1 is a block diagram schematically showing a control apparatus and a vehicular diesel engine to which the invention can be applied. This invention can also be applied to a lean-burn gasoline engine or the like that uses a similar catalyst structure.

A diesel engine 2 includes a plurality of cylinders. In this case, there are four cylinders #1, # 2, #3, and #4. A combustion chamber 4 of each of the cylinders #1 to #4 is connected to a surge tank 12 via an intake port 8 and an intake manifold 10. The intake port 8 is opened and closed by an intake valve 6. The surge tank 12 is connected to an inter-cooler 14 and a supercharger (in this case, the outlet side of a compressor 16a of an exhaust gas turbocharger 16) via an intake air path 13. The input side of the compressor 16a is connected to an air cleaner 18. An EGR gas supply inlet 20a of an exhaust gas recirculation (hereinafter simply referred to as "EGR") path 20 opens into the surge tank 12. A throttle valve 22 is arranged in the intake air path 13 between the surge tank 12 and the inter-cooler 14. An intake air amount sensor 24 and an intake air temperature sensor 26 are provided between the compressor 16a and the air cleaner 18.

The combustion chamber 4 of each of the cylinders #1 to #4 is connected to the inlet side of an exhaust gas turbine 16b of the exhaust gas turbocharger 16 via an exhaust port 30 and an exhaust manifold 32. The exhaust port 30 is opened and closed by an exhaust valve 28. The outlet side of the exhaust gas turbocharger 16 is connected to an exhaust path 34. The exhaust gas turbine 16b introduces exhaust gas into the exhaust manifold 32 from the fourth cylinder #4 side.

Three catalytic converters 36, 38, and 40 housing exhaust gas control catalysts are provided in the exhaust path 34. A NOx absorption/reduction catalyst 36a is housed in the first catalytic converter 36 farthest upstream in the exhaust path 34. NOx is absorbed by the NOx absorption/reduction catalyst 36a when the exhaust is subject to an oxidizing atmosphere (i.e., lean) while the diesel engine 2 is operating normally. In a reducing atmosphere (i.e., when the air-fuel ratio is the stoichiometric air-fuel ratio or lower), the NOx absorbed by the NOx absorption/reduction catalyst 36a is released as NO and reduced by HC and CO, thus purifying the NOx.

A filter 38a having a wall portion of a monolith construction is housed in the second catalytic converter 38 which is arranged mid-stream in the exhaust path 34. The filter 38a is structured such that the exhaust gas passes through very tiny holes in the wall portion. A NOx absorption/reduction catalyst is coated on the tiny-holed surface of the filter 38a, and it is this catalyst that purifies the NOx as described above. Further, particulate matter (hereinafter referred to as "PM") in the exhaust gas becomes trapped in the filter wall portion. In a high temperature oxidizing atmosphere, the PM begins to oxidize by the active oxygen produced when the NOx is absorbed. The PM then oxidizes entirely as excess oxygen surrounds it. This results in not only the purification of NOx but also the purification of PM. In this case, the first catalytic converter 36 and the second catalytic converter 38 are integrally formed as a single unit.

The third catalytic converter 40 farthest downstream in the exhaust path 34 houses a oxidization catalyst 40a. This third catalytic converter 40 purifies HC and CO by oxidizing them. A first air-fuel ratio sensor 42 is provided upstream of the NOx absorption/reduction catalyst 36a in the first catalytic converter 36, and a first exhaust gas temperature sensor 44 is provided between the NOx absorption/reduction catalyst 36a and the filter 38a in the second catalytic converter 38. Between the filter 38a and the oxidization catalyst 40a, a second exhaust gas temperature sensor 46 is provided near the filter 38a and a second air-fuel ratio sensor 48 is provided near the oxidization catalyst 40a.

The first air-fuel ratio sensor 42 and the second air-fuel ratio sensor 48 are both sensors which detect the air-fuel ratio of the exhaust at their respective locations based on the exhaust gas composition, and send out voltage signals proportionate to the air-fuel ratios. The first exhaust gas temperature sensor 44 and the second exhaust gas temperature sensor 46 detect the exhaust gas temperatures at their respective locations.

A conduit in which a differential pressure sensor 50 is provided extends from the upstream side of the filter 38a in the second catalytic converter 38 to the downstream side thereof. This differential pressure sensor 50 detects the pressure difference between the upstream and downstream sides of the filter 38a in order to detect clogging of the filter 38a.

An EGR gas intake opening 20b of the EGR path 20 opens into the exhaust manifold 32. This EGR gas intake opening 20b opens on the first cylinder #1 side, which is the side opposite the fourth cylinder #4 side where the exhaust gas is introduced into the exhaust gas turbine 16b.

An EGR catalyst 52 for reforming EGR gas and an EGR cooler 54 for cooling the EGR gas are provided in sequence from the EGR gas intake opening 20b side midway in the EGR path 20. The EGR catalyst 52 also serves to prevent the EGR cooler 54 from clogging. An EGR valve 56 is provided on the EGR gas supply inlet 20a side. The amount of EGR gas supplied from the EGR gas supply inlet 20a to the intake system can be regulated by adjusting the opening amount of the EGR valve 56.

A fuel injection valve 58 which injects fuel directly into each combustion chamber 4 is provided in each of the cylinders #1 to #4. This fuel injection valve 58 is connected to a common rail 60 via a fuel supply line 58a. Fuel is supplied from an electrically controlled fuel pump 62, which is capable of changing the discharge amount, into the common rail 60. High-pressure fuel supplied from the fuel pump 62 to the common rail 60 is then distributed to each of the fuel injection valves 58 via the fuel supply line 58a. A fuel pressure sensor 64 for detecting the fuel pressure is provided in the common rail 60.

Further, low-pressure fuel is supplied from the fuel pump 62 to a separate supply valve 68 via a fuel supply line 66. This supply valve 68 is provided in the exhaust port 30 of the fourth cylinder # 4 and adds fuel into the exhaust gas by injecting it toward the exhaust gas turbine 16b side. This addition of fuel temporarily creates a reducing atmosphere that reduces and purifies the NOx absorbed by the NOx absorption/reduction catalyst 36a of the first catalytic converter 36 and the filter 38a of the second catalytic converter 38. Moreover, purification of the PM when it has accumulated to a certain degree on the filter 38a is accomplished by increasing the temperature by adding fuel using the supply valve 68. Also, the routine for recovering the catalyst from sulfur poisoning is executed by repeatedly increasing the temperatures of the NOx absorption/reduction catalyst 36a and the filter 38a by adding fuel using the supply valve 68 and decreasing the air-fuel ratio to the stoichiometric air-fuel ratio or lower based on the extent of sulfur poisoning (hereinafter also referred to as "S poisoning") of the NOx absorption/reduction catalyst 36a and the filter 38a.

A electronic control unit (hereinafter referred to as "ECU") 70 includes as its main components a digital computer provided with a CPU, ROM, RAM, and the like, and a drive circuit for driving various devices. The ECU 70 reads signals from the intake air amount sensor 24, the intake air temperature sensor 26, the first air-fuel ratio sensor 42, the first exhaust gas temperature sensor 44, the second exhaust gas temperature sensor 46, the second air-fuel ratio sensor 48, the differential pressure sensor 50, an EGR opening amount sensor inside the EGR valve 56, the fuel pressure sensor 64, and a throttle opening amount sensor 22a. The ECU 70 also reads signals from an accelerator opening amount sensor 74 that detects a depression amount (i.e., accelerator opening amount) of an accelerator pedal 72, and a coolant temperature sensor 76 that detects the temperature of coolant in the diesel engine 2. In addition, the ECU 70 reads signals from an engine speed sensor 80 that detects a rotation speed of a crankshaft 78, and a cylinder determining sensor 82 that distinguishes between cylinders by detecting the rotational phase of the crankshaft 78 or an intake cam.

The ECU 70 executes fuel injection timing control and fuel injection quantity control with the fuel injection valve 58 based on the engine operating state obtained from the various signals. Furthermore, various routines are executed for opening amount control of the EGR valve 56, throttle opening amount control by the motor 22b, discharge amount control of the fuel pump 62, and PM regeneration control and sulfur poisoning recovery control (to be described later). For example, EGR control is executed in which the throttle opening amount and the EGR opening amount (i.e., the opening amount of the EGR valve 56) are adjusted in coordination such that the EGR rate becomes a target EGR rate set based on the engine load and the engine speed NE. Moreover, intake air amount feedback control is executed in which the EGR opening amount is adjusted such that the intake air amount becomes a target intake air amount (i.e., a target value per one revolution of the engine) that is set based on the engine load and the engine speed NE. The engine load in this case is the fuel injection quantity, but it may also be the accelerator opening amount.

The combustion mode control executed by the ECU 70 executes either a normal combustion mode or a low temperature combustion mode, depending on the operating state of the engine. The low temperature combustion mode in this case is a combustion mode which simultaneously reduces NOx and smoke by slowly increasing the combustion temperature using a large amount of exhaust gas recirculation. In this exemplary embodiment, the low temperature combustion mode is executed mainly in the low-to-mid speed range with a low load. In the normal combustion mode, normal EGR control (which also includes not using EGR) is executed.

There are four catalyst control modes in which control routines for the catalyst are executed: a PM regeneration control mode, a sulfur poisoning recovery control mode, a NOx reduction control mode, and a normal control mode. The PM regeneration control mode is a mode which, as described above, combusts the PM accumulated particularly on the filter 38a in the second catalytic converter 38 to produce $CO_2$ and $H_2O$, which are then released. In this mode, fuel is repeatedly added from the supply valve 68 with an air-fuel ratio higher than the stoichiometric air-fuel ratio to increase the catalyst bed temperature (to 600 to 700 °C, for example). A subsequent injection may also be added using the fuel injection valve 58.

The sulfur poisoning recovery control mode is a mode which recovers the NOx absorption/reduction catalyst 36a and the filter 38a from sulfur poisoning by releasing the sulfur components (hereinafter also referred to as "S components"), as described above, when the NOx absorption/reduction catalyst 36a and the filter 38a have sustained sulfur poisoning such that their NOx absorbing performance is reduced. In this mode, a routine is executed to increase the catalyst bed temperature (to 600 to 700 °C, for example) by repeatedly adding fuel using the supply valve 68, as well as bring the air-fuel ratio to the stoichiometric air-fuel ratio or slightly lower. In this mode as well, a subsequent injection may also be added using the fuel injection valve 58.

The NOx reduction control mode is a mode which reduces NOx absorbed in the NOx absorption/reduction catalyst 36a and the filter 38a to $N_2$, $CO_2$, and $H_2O$, which are then released. In this mode, a routine is executed which brings the catalyst bed temperature to a relatively low temperature (such as 250 to 500 °C) by adding fuel using the supply valve 68 at comparatively long intervals and reduces the air-fuel ratio to the stoichiometric air-fuel ratio or lower.

When none of the aforementioned three catalyst control modes are being executed, the normal control mode is the control mode is used. In the normal control mode, fuel is not added using the supply valve 68 nor is a subsequent injection performed by the fuel injection valve 58. FIG 2 is a flowchart of the PM regeneration control routine executed by the ECU 70. This PM regeneration control routine is a routine which controls the catalyst bed temperature of the filter 38a to a target bed temperature (such as 650 °C) when the amount of accumulated PM reaches a reference accumulation amount in order to oxidize the PM, thereby purifying it. This routine is executed at regular intervals of time.

When the routine starts, the PM accumulation amount PMsm is first calculated as in Expression 1 (step S102).

$$[\text{Expression 1}]\quad \text{PMsm} \leftarrow \text{PMsmold} + \text{PMe} - \text{PMc} + \text{PMadd}$$

In this expression, the last value PMsmold is the PM accumulation amount PMsm calculated the last time the routine was executed. The engine exhaust amount PMe is the amount of PM exhausted from all of the combustion chambers 4 of the diesel engine 2 during one control cycle of the routine. To obtain this engine exhaust amount PMe, the PM exhaust amount is first obtained through experimentation beforehand and then mapped with the engine speed NE and load (in this case, the amount of fuel injected by the fuel injection valve 58) as parameters. The engine exhaust amount PMe is then obtained from the current engine speed NE and load based on this map. The oxidization amount PMc is the amount of PM trapped in the filter 38a that is purified by oxidization during one control cycle of the routine. To obtain this oxidization amount PMc, the PM oxidization amount is first obtained through experimentation beforehand and then mapped with the catalyst bed temperature of the filter 38a (i.e., the exhaust gas temperature detected by the second exhaust gas temperature sensor 46, in this case) and the intake air amount as parameters. The oxidization amount PMc is then obtained from the current catalyst bed temperature and the intake air amount based on this map.

The PM accumulation correction amount PMadd is a correction amount established for increasing the frequency with which PM regeneration is executed when the sulfur poisoning is excessive. This PM accumulation correction amount PMadd is calculated as shown in Expression 2.

$$[\text{Expression 2}]\quad \text{PMadd} \leftarrow \text{PMe} \times \text{Kst} \times \text{Kout} \times \text{Ksw}$$

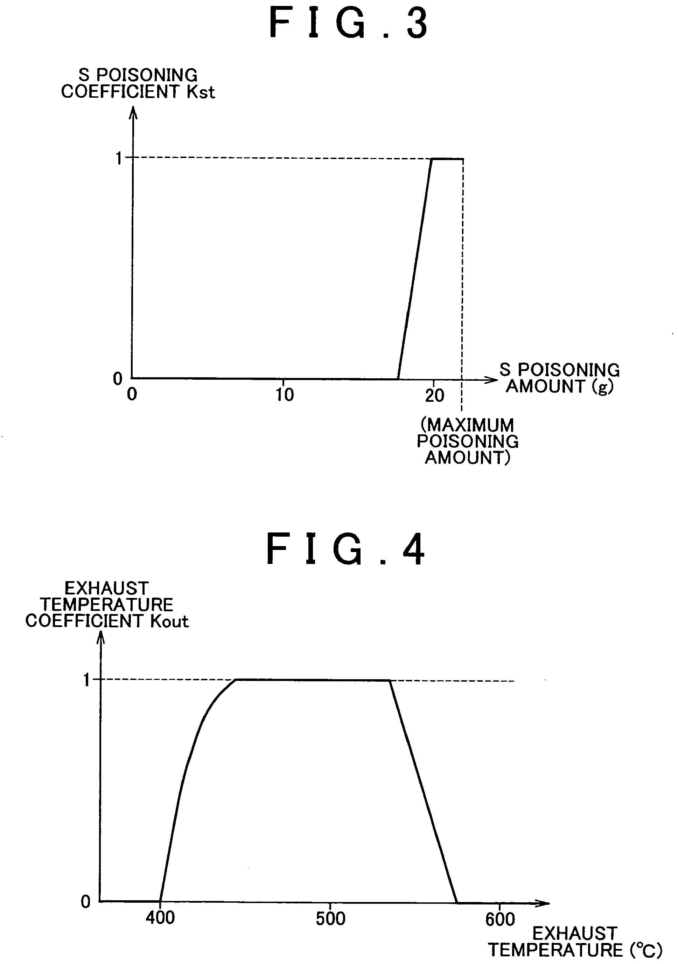

In this expression, the engine exhaust amount PMe is as described above, and the sulfur poisoning coefficient Kst is calculated based on the sulfur poisoning amount (g) from a sulfur poisoning map, as shown in FIG 3, obtained through experimentation beforehand. The sulfur poisoning amount is the amount of sulfur components absorbed by the alkaline metals in the NOx absorption/reduction catalyst coated on the NOx absorption/reduction catalyst 36a and the filter 38a. The sulfur poisoning amount is a value obtained by summing the sulfur components contained in the fuel injected from the fuel injection valve 58 in order to determine whether to execute the sulfur poisoning recovery control. When the sulfur poisoning amount reaches a maximum poisoning amount indicating a state in which the alkaline metals are completely saturated with the sulfur components, a routine is executed which fixes the value of the sulfur poisoning amount at the maximum poisoning amount. In FIG. 3, Kst is set to equal "0", except for the side near saturation. This is because deposits of the sulfur compone0nts start to build up on the NOx absorption/reduction catalyst after the alkaline metals have become nearly saturated with the sulfur components.

The exhaust gas temperature coefficient Kout is calculated based on the exhaust gas temperature (°C) detected by the second exhaust gas temperature sensor 46 provided on the outlet side of the filter 38a, from an exhaust gas temperature coefficient map, as shown in FIG. 4, obtained through experimentation beforehand. As described above, the exhaust gas temperature detected by the second exhaust gas temperature sensor 46 is a temperature that reflects the catalyst bed temperature of the filter 38a. In FIG. 4, the exhaust gas temperature coefficient Kout decreases to "0" on both the low temperature side and the high temperature side. This is because on the low temperature side sulfur components do not accumulate on the NOx absorption/reduction catalyst, and on the high temperature side the sulfur components are removed.

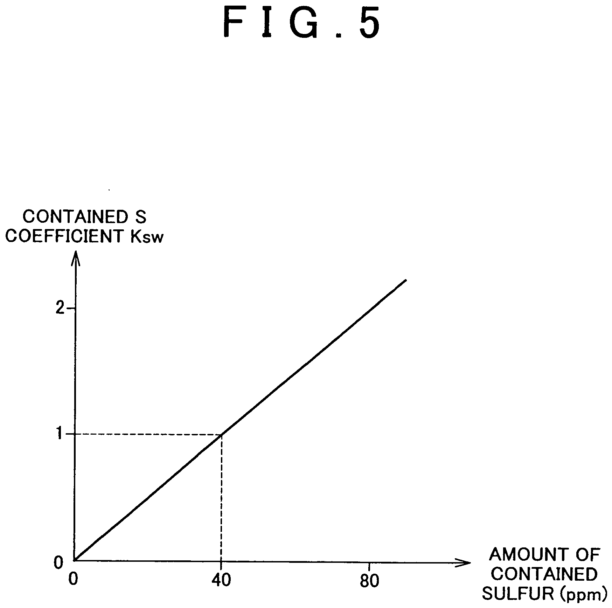

The contained sulfur coefficient Ksw is a coefficient proportionate to the amount of sulfur (ppm) contained within the fuel, as shown in FIG. 5. This coefficient indicates the ease with which the sulfur tends to accumulate. The amount of contained sulfur may be a value assigned by a driver using a switch or the like, or it may be a fixed value if the fuel used contains a set amount of sulfur. Alternatively, a sensor for measuring the concentration of the sulfur components may be provided in the fuel tank or the exhaust system or the like and a measured value may be used.

After the PM accumulation amount PMsm is calculated in this way, it is then determined whether the temperature increase control for regenerating PM is being executed (S104). If the temperature increase control is not being executed (i.e., NO in step S 104), it is next determined whether the PM accumulation amount PMsm is equal to, or greater than, a reference accumulation amount PMjd used for determining whether PM regeneration should be performed (step S106). Here, if PMsm is less than PMjd (i.e., NO in step S106), it is determined that it is not time to regenerate PM, and this cycle of the routine ends.

In the next control cycle as well, if PMsm is less than PMjd according to the calculation (step S102) of the PM accumulation amount PMsm (i.e., NO in step S 106), PM regeneration is not performed. Repeating this routine, however, increases the PM accumulation amount PMsm because the difference of "PMe - PMc" on the right hand side of Expression 1, which indicates the amount of PM actually accumulating with each cycle, is added to it. In addition, if the sulfur poisoning is excessive, the PM accumulation amount PMsm further increases because the PM accumulation correction amount PMadd is also added to the it. If these factors lead to an increase in the PM accumulation amount PMsm such that PMsm becomes equal to, or greater than, PMjd (i.e., YES in step S 106), then the temperature increase control for PM regeneration is then executed (step S 108), after which this cycle of the routine ends.

When the temperature increase control is executed, the ECU 70 adds fuel into the exhaust gas using the supply valve 68. This in particular increases the catalyst bed temperature of the NOx absorption/reduction catalyst in the filter 38a in the second catalytic converter 38 to the target bed temperature (in this case, 650 °C), such that the PM trapped in the filter 38a is oxidized, thereby regenerating the filter 38a. In this exemplary embodiment, if there is a deposit of sulfur components, that deposit is also released at the same time.

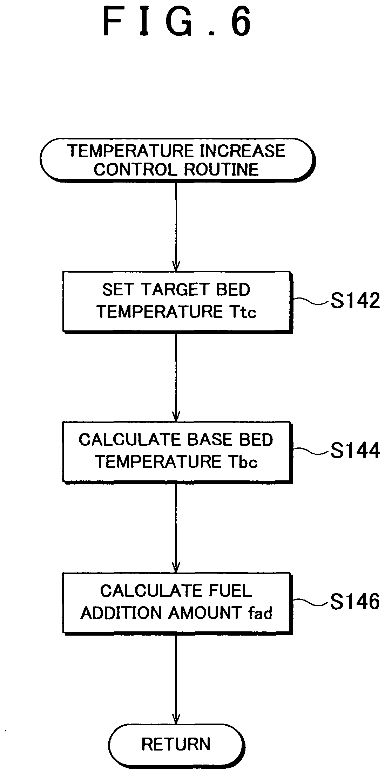

The flowchart in FIG. 6 shows one example of this temperature increase control. This temperature increase control routine is a routine that is repeated at regular intervals of time when the temperature increase control is executed in step S108. In this routine, a target bed temperature Ttc (= 650 °C) of the NOx absorption/reduction catalyst in the filter 38a is first set (step S142).

Next, a base bed temperature Tbc is obtained (step S144). This base bed temperature Tbc is a bed temperature when the filter 38a is not generating reaction heat by a catalytic reaction. The base bed temperature Tbc is thought to be the same as the exhaust gas temperature of the diesel engine 2, so it can be estimated based on the current engine speed NE and load (the amount of fuel injected by the fuel injection valve 58, in this case) from a map prepared through experimentation beforehand according to the engine speed NE and load of the diesel engine 2.

Next, a fuel addition amount fad per unit time for maintaining the catalyst bed temperature of the filter 38a at the target bed temperature Ttc is calculated as shown in Expression 3 (step S146).

$$[\text{Expression 3}]\ fad \leftarrow (Ttc - Tbc) \times GA \times Ck$$

In this expression, the intake air amount GA is an intake air amount (g/s) detected by the intake air amount sensor 24. The fuel conversion coefficient Ck is a coefficient for converting the intake air amount GA to a fuel amount. This coefficient indicates the amount of fuel necessary to increase the temperature of the exhaust gas, which has a flow rate of 1 g/s, 1 °C. Accordingly, the right side of Expression 3 calculates the amount of fuel per unit time necessary to increase the catalyst bed temperature in the filter 38a from the base bed temperature Tbc to the target bed temperature Ttc with an exhaust gas flow rate that corresponds to the intake air amount GA. This cycle of the routine then ends.

By repeating this routine, fuel is added from the supply valve 68, thereby increasing the catalyst bed temperature of the filter 38a to the target bed temperature Ttc and maintaining it there. Returning now to the description of the PM regeneration control routine (FIG. 2), because the temperature increase control was executed in step S108 in the last cycle, in the next cycle, after the PM accumulation amount PMsm is calculated (step S102), it is determined that the temperature increase control is being executed (i.e., YES in step S104). Accordingly, it is then determined whether the PM accumulation amount PMsm is greater than "0" (step S 110). Because the temperature increase control is being executed, in Expression 1 there is not much change in the engine exhaust amount PMe, but there is a rapid increase in the oxidization amount PMc. Moreover, the exhaust gas temperature increases to 650 °C. As a result, the exhaust gas temperature coefficient Kout obtained from FIG. 4 is "0" so the PMadd from Expression 2 also becomes "0". Therefore, during the temperature increase control, the value of the PM accumulation amount PMsm rapidly decreases and the PM accumulated on the filter 38a completely disappears. Step S110 is a step for determining whether the PM has completely disappeared.

If PMsm is greater than "0" (i.e., YES in step S110), the PM has not yet completely disappeared, so this cycle of the routine ends. Accordingly, the temperature increase control routine (FIG 6) is continued. If, according to the calculation in Expression 1, the PMsm is equal to, or less than, "0" (i.e., NO in step S110), the PM has completely disappeared so the temperature increase control is stopped (step S112). As a result, the temperature increase control routine (FIG 6) is stopped and fuel is no longer added from the supply valve 68 by the temperature increase control for PM regeneration. The value of the PM accumulation amount PMsm is then cleared (= "0") (step S114) and this cycle of the routine ends.

In the next control cycle, the PM accumulation amount PMsm is calculated from Expression 1 with the last value PMsmold equaling "0" (step S102). Because the temperature increase control is not being executed (i.e., NO in step S104), the routine proceeds on to step described above.

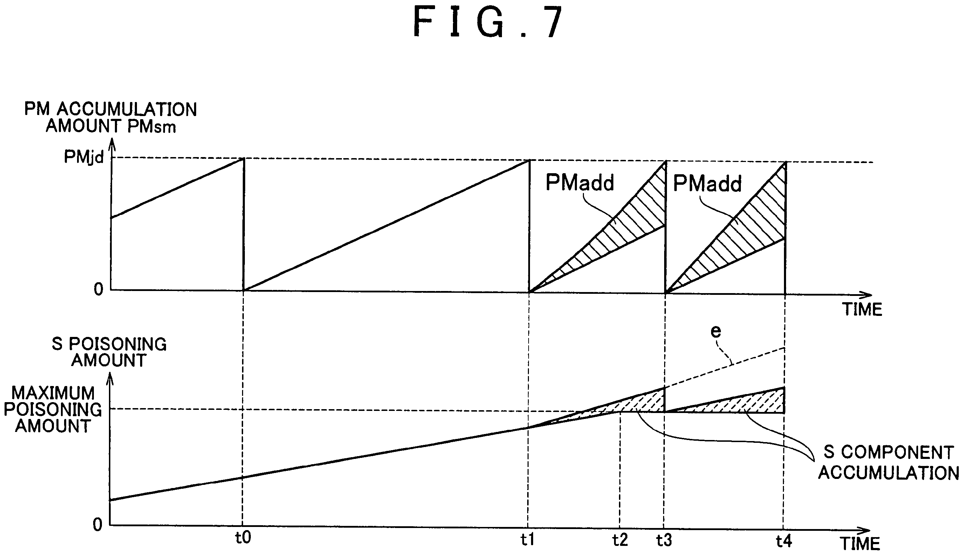

FIG. 7 is a timing chart showing an example of control according to this exemplary embodiment of the invention. In the drawing, the engine operating state does not come into the range in which sulfur poisoning recovery control is executed until time t4 so the sulfur poisoning amount of the NOx absorption/reduction catalyst 36a and the filter 38a gradually increases, reaching the maximum poisoning amount at time t2, at which time all of the alkaline metals have been poisoned by the sulfur. Further, the sulfur components also start to accumulate from time t1, as illustrated by the hunting shown by the broken-line hatching in FIG. 7, due to excessive sulfur poisoning.

Therefore, before time t1 when deposits of the sulfur components have not yet built up, the PM accumulation amount PMsm increases by only the value of "PMe - PMc" on the right hand side of Expression 1, which indicates the actual amount of PM accumulating with each cycle, being added to it. Accordingly, PMsm becomes equal to, or greater than, PMjd at a normal frequency, in this case, every 200km, at which time the PM is purified through oxidization by the temperature increase control routine (FIG. 6) (t0, t1).

Then immediately after time t1, the sulfur poisoning coefficient Kst becomes a positive value and continues to gradually increase, as shown in FIG. 3. When both the contained sulfur coefficient Ksw and the exhaust gas coefficient Kout become greater than "0" at this time, the PM accumulation correction amount PMadd becomes greater than "0". With the addition of this PM accumulation correction amount PMadd, the PM accumulation amount PMsm increases at an even faster rate. This rapid increase in the PM accumulation amount PMsm results in the PM accumulation amount PMsm becoming equal to, or greater than, PMjd early on. Here, every 100km or less the PMsm becomes equal to, or greater than, PMjd and the PM is purified by the temperature increase control routine (FIG. 6) (t3, t4). Moreover, in this temperature increase control, the temperature increase routine is a lean-burn temperature increase routine in which the air-fuel ratio of the exhaust gas is the stoichiometric air-fuel ratio or higher. As a result, the sulfur components deposited (i.e., accumulated) on the catalyst are removed from the surface thereof while the sulfur components absorbed in the alkaline metals are not removed.

In this manner, the deposit of sulfur components due to excessive sulfur poisoning are removed by the lean-burn temperature increase routine under the PM regeneration control. Accordingly, thereafter the engine operating state immediately after time t4 in FIG. 7 enters the range in which sulfur poisoning recovery control is executed. Accordingly, the sulfur poisoning recovery control executes the temperature increase routine and the routine to reduce the air-fuel ratio to the stoichiometric air-fuel ratio or slightly lower. At this time, only the sulfur components absorbed in the alkaline metals are released. Because the deposit or accumulation of sulfur components is not also released, it is therefore possible to suppress the release of a high concentration of sulfur components.

Also, because the frequency with which the lean-burn temperature increase routine is performed is greater than that of the temperature increase routine under the normal PM regeneration control (in this case, the frequency is more than two times as great), in the lean-burn temperature increase routine under the PM regeneration control, the amount of the accumulated sulfur components released each time is less so the concentration of the released sulfur components is able to be suppressed.

As with the related art, when the lean-burn temperature increase routine under the PM regeneration control is not being performed between times t1 and t4, the accumulation of the sulfur components increases, as shown by the broken line e. Therefore, when the temperature increase routine and the routine for decreasing the air-fuel ratio to the stoichiometric air-fuel ratio or slightly lower are executed by the sulfur poisoning recovery control which is started immediately after time t4, the accumulation of sulfur components is released at the same time the sulfur components are released from the alkaline metals, such that an extremely high concentration of sulfur components ends up being released.

In the structure described above, the ECU 70 functions as both the excessive sulfur poisoning recovery control method and apparatus for the exhaust gas control catalyst. The sulfur poisoning recovery control executed by this ECU 70 corresponds to the routine executed by the sulfur poisoning recovering means, and the PM regeneration control routine (FIG. 2) and the temperature increase control routine (FIG. 6) correspond to the routine executed by the fine particle regeneration controlling means. Further, the calculation "Kst × Kout × Ksw" in Expression 2 in step S102 corresponds to the routine executed by the excessive sulfur poisoning amount detecting means. The routine in which the PM accumulation correction amount PMadd is added to the sum of the PM accumulation amount PMsm in Expression 1 in step S102 corresponds to the routine executed by the temperature increasing/sulfur component releasing means.

The following effects can be achieved by the foregoing first exemplary embodiment.

(1) When the sulfur poisoning becomes excessive, the sulfur components accumulate up to the filter 38a and the NOx absorption/reduction catalyst 36a, and on occasion, up to the oxidization catalyst 40a. In this case, the frequency with which the lean-burn temperature increase routine (i.e., the temperature increase control in FIG. 6) is performed in the PM regeneration control is increased by the calculation in Expression 1, such that the sulfur components accumulated on these exhaust gas control catalysts is released.

The lean-burn temperature increase routine of the fine particle regeneration controlling means is not restricted to a specific engine operating range. Therefore, even if the sulfur poisoning is so excessive that the engine operating state does not come into the sulfur poisoning recovery control execution range, the lean-burn temperature increase routine can still be executed under the PM regeneration control. Moreover, because the frequency with which the lean-burn temperature increase routine is executed under the PM regeneration control is increased by the calculation in Expression 1, the lean-burn temperature increase routine is executed early on before the amount of accumulated sulfur components becomes large.

In this manner, the excessive sulfur components on each of the exhaust gas control catalysts are released by the lean-burn temperature increase routine under the PM regeneration control. When the sulfur components are released by executing the lean-burn temperature increase routine, only the accumulated excessive sulfur components are released. The sulfur components absorbed in the alkaline metals are not released at this time. Further, the lean-burn temperature increase routine is executed at a high frequency. As a result, it is possible to keep down the concentration of the sulfur components that are released.

Moreover, if the engine is operating in the sulfur poisoning recovery control execution range, the sulfur components absorbed in the alkaline metals are released by the sulfur poisoning recovery control when the sulfur poisoning amount of the exhaust gas control catalysts is no longer excessive. This also keeps down the sulfur components that are released. Also, even if the sulfur poisoning recovery control is executed while sulfur components are accumulated on the catalyst, that amount of the accumulated sulfur components is kept from increasing due to the fact that the lean-burn temperature increase routine is executed at a high frequency. As a result, the release of a high concentration of sulfur components can be suppressed.

As a result, it is possible to prevent a high concentration of sulfur components from being released when the sulfur poisoning amount of an exhaust gas control catalyst such as the filter 38a and the NOx absorption/reduction catalyst 36a, for example, becomes excessive. Accordingly, it is possible to sufficiently minimize white smoke and a foul smell and the like that are produced when a high concentration of sulfur components is released.

(2) In this exemplary embodiment, the PM accumulation amount PMsm is increased in order to increase the frequency with which the lean-burn temperature increase routine under the PM regeneration control is executed. The amount of increase is determined according to the amount of accumulated sulfur components by calculating each of the coefficients Kst, Kout, and Ksw based on the sulfur poisoning amount, the exhaust gas temperature, and the contained sulfur amount, respectively, according to the maps in FIGS. 3 to 5. As a result, the amount of excessive sulfur components is accurately reflected in the PM accumulation amount PMsm, which enables the frequency with which the lean-burn temperature increase routine is executed to be effectively increased.

(3) The frequency with which the lean-burn temperature increase routine is executed is adjusted according to the maps in FIGS. 3 to 5. This frequency is such that the lean-burn temperature increase routine is executed before the sulfur component concentration during release of the sulfur components from execution of the lean-burn temperature increase routine becomes high (in this case, a frequency of more than twice that of the temperature increase routine under the normal PM regeneration control). Thus it is possible to reliably keep down the concentration of sulfur components when they are released by executing the lean-burn temperature increase routine.

[Second Embodiment]

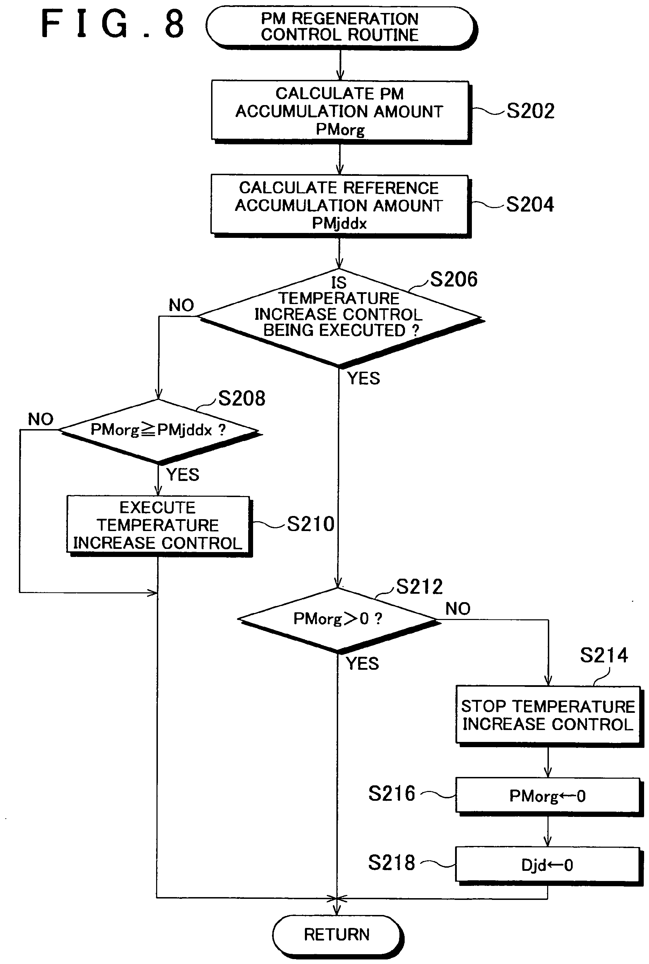

According to a second exemplary embodiment of the invention, the frequency with which the lean-burn temperature increase routine is executed under the PM regeneration control is increased by reducing the reference accumulation amount PMjddx according to the amount of accumulated sulfur components. Therefore, the PM regeneration control routine shown in FIG. 8 is executed at regular intervals of time instead of the PM regeneration control routine shown in FIG. 2, illustrated in the first exemplary embodiment. The hardware structure and the temperature increase control routine in the second exemplary embodiment are the same as in the first exemplary embodiment. Therefore, FIG. 1 will be used to refer to the hardware structure and FIG. 6 will be used to refer to the temperature increase control routine in the second exemplary embodiment.

The PM regeneration control routine (FIG. 8) will now be described. When the routine starts, the PM accumulation amount PMorg is first calculated as shown in Expression 4 (step S202).

$$[\text{Expression 4}]\ \text{PMorg} \leftarrow \text{PMorgold} + \text{PMe} - \text{PMc}$$

In this expression, the last value PMorgold is the PM accumulation amount PMorg calculated the last time this routine was executed. The engine exhaust amount PMe and the oxidization amount PMc are the same as in step S102 in the first exemplary embodiment. In Expression 4, the PM accumulation correction amount PMadd is not added as it is in Expression 1, so the actual amount of accumulated PM is indicated.

After the PM accumulation amount PMorg is calculated in this way, the reference accumulation amount PMjddx is then calculated as shown in Expression 5 (step S204).

$$[\text{Expression 5}]\ \text{PMjddx} \leftarrow \text{PMjd} - \text{Djd}$$

In this expression, the reference accumulation base amount PMjd is the same value as the reference accumulation amount PMjd used in step S106 in the first exemplary embodiment.

The reference value correction amount Djd is a correction amount established to increase the frequency with which PM regeneration is executed when the sulfur poisoning is excessive. This reference value correction amount Djd is calculated as shown in Expression 6.

$$[Expression\ 6]\ Djd \leftarrow Djdold + (PMe \times Kst \times Kout \times Ksw)$$

In this expression, the last value Djdold is the reference value correction amount Djd calculated the last time this routine was executed. The engine exhaust amount PMe is as described above. The sulfur poisoning coefficient Kst, the exhaust gas temperature coefficient Kout, and the contained sulfur coefficient Ksw are the same as explained in step S102 in the first exemplary embodiment, and are calculated according to their respective maps (FIGS. 3 to 5).

Next, it is determined whether the temperature increase control for PM regeneration is being executed (step S206). If the temperature increase control is not being executed (i.e., NO in step S206), it is then determined whether the PM accumulation amount PMorg is equal to, or greater than, the reference accumulation amount PMjddx (step S208). If PMorg is less than PMjddx (i.e., NO in step S208), it is determined that it is not time to execute the temperature increase control for PM regeneration and this cycle of the routine ends.

If in the next control cycle PMorg is still less than PMjddx (i.e., NO in step S208) even after the PM accumulation amount PMorg is calculated (step S202) and the reference accumulation amount PMjddx is calculated (step S204), the temperature increase control is not executed.

By repeating this routine, the PM accumulation amount PMorg increases because "PMe - PMc" on the right side of Expression 4, which indicates the actual amount of PM accumulated with each cycle, is added to the PM accumulation amount PMorg. Furthermore, if the sulfur poisoning becomes excessive, the reference value correction amount Djd subtracted from the reference accumulation base amount PMjd becomes a positive value and the reference accumulation amount PMjddx decreases, according to Expressions 5 and 6. If the PM accumulation amount PMorg increases and, depending on the circumstances, the reference accumulation amount PMjddx also decreases such that PMorg becomes equal to, or greater than, PMjddx (i.e., YES in step S208), the temperature increase control for PM regeneration is executed (step S210), after which this cycle of the routine ends.

When the temperature increase control is executed, the ECU 70 opens the supply valve 60 to add fuel into the exhaust gas. As a result, the temperature increase control routine (FIG. 6) is executed as described in the first exemplary embodiment such that the catalyst bed temperature of the filter 38a is increased to the target bed temperature Ttc and maintained there.

In the next control cycle, the PM accumulation amount PMorg is calculated (step S202) and the reference accumulation amount PMjddx is calculated (step S204). Because the temperature increase control that was executed in the last control cycle is still being executed (i.e., YES in step S206), it is determined whether the PM accumulation amount PMorg is greater than "0" (step S212).

Because the temperature increase control is being executed, in Expression 4, there is not much change in the engine exhaust amount PMe, but there is a rapid increase in the oxidization amount PMc. As a result, the value of the PM accumulation amount PMorg falls quickly and the PM accumulated on the filter 38a starts to disappear.

Regarding the reference accumulation amount PMjddx, because the exhaust temperature is 650 °C, the exhaust temperature coefficient Kout obtained in FIG. 4 becomes "0" which results in the product of "(PMe × Kst × Kout × Ksw)" equaling "0" in Expression 6. As a result, the reference value correction amount Djd becomes constant so the reference accumulation amount PMjddx decreases.

Further, if PMorg is greater than "0" (i.e., YES in step S110), the PM has not yet completely disappeared so this cycle of the routine ends. Accordingly, the temperature increase control routine (FIG. 6) is continued. When PMorg becomes equal to, or less than, "0" according to the calculation in Expression 4 (i.e., NO in step S212), the PM has completely disappeared, so the temperature increase control(FIG. 6) is stopped. As a result, the supply valve 68 stops adding fuel under the temperature increase control for PM regeneration. The value of the PM accumulation amount PMorg is then cleared (step S216), as is the value of the reference value correction amount Djd (step S218), after which this cycle of the routine ends.

In the next control cycle, the PM accumulation amount PMorg is calculated using Expression 4 with the last value PMorgold equaling "0" (step S202). In addition, the reference accumulation amount PMjddx is calculated using Expressions 5 and 6 with the last value Djdold equaling "0" (step S204). Because the temperature increase control is not being executed (i.e., NO in step S206), the routine proceeds on to step described above.

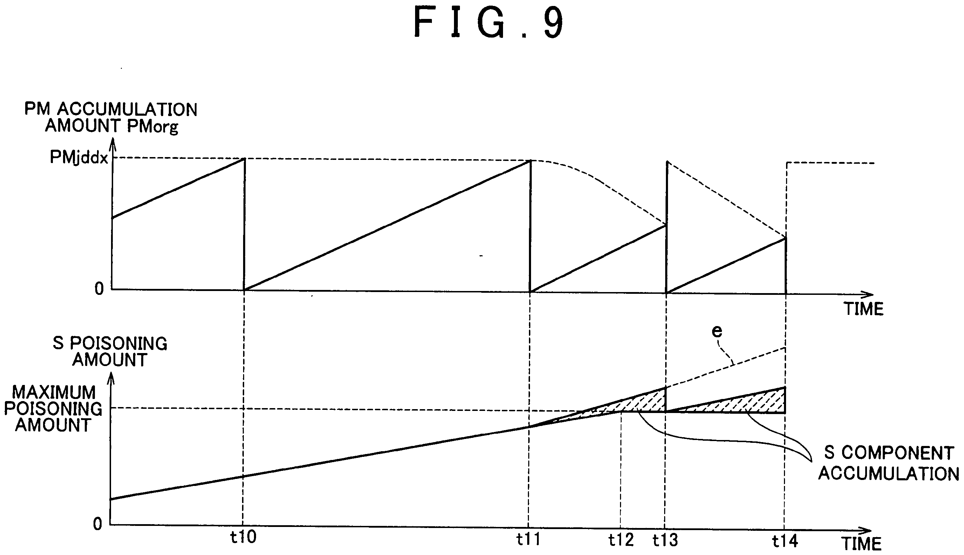

One example of control according to this exemplary embodiment is shown the timing chart in FIG. 9. In the drawing, the engine operating state does not come into the sulfur poisoning recovery control execution range until time tl4. The sulfur poisoning amount of the NOx absorption/reduction catalyst 36a and the filter 38a gradually increases, reaching the maximum poisoning amount at time t12, at which time all of the alkaline metals have been poisoned by the sulfur. Further, the sulfur components start to accumulate from time t11, as illustrated by the hunting shown by the broken-line hatching in FIG. 9, due to excessive sulfur poisoning.

Therefore, before time t11 when deposits of the sulfur components have not yet built up much, the PM accumulation amount PMorg increases according to the calculation in Expression 4. Because the sulfur poisoning coefficient Kst equals "0", however, the reference value correction amount Djd becomes equal to "0" such that the reference accumulation amount PMjddx is constant at a value equal to the reference accumulation base amount PMjd.

Accordingly, the PMorg becomes equal to, or greater than, PMjddx at a normal frequency, in this case, every 200km, at which time the PM is purified through oxidization by executing the temperature increase control routine (FIG. 6) (t10, t11). Then immediately after time t11, the sulfur poisoning coefficient Kst becomes a positive value, as shown in FIG. 3, and gradually increases. When both the exhaust gas coefficient Kout and the contained sulfur coefficient Ksw become greater than "0" at this time, the reference value correction amount Djd also becomes greater than "0". According to Expression 5, the reference accumulation amount PMjddx becomes smaller than the reference accumulation base amount PMjd by the reference value correction amount Djd.

This decrease in the PM accumulation amount PMjddx results in the PM accumulation amount PMorg becoming equal to, or greater than, the reference accumulation amount PMjddx early on. Here, every 100km or less the PMorg becomes equal to, or greater than, the PMjddx and the PM is purified by the temperature increase control routine (FIG. 6) (t13, t14). At the same time, the lean-burn temperature increase routine removes the sulfur components accumulated or deposited on the catalyst from the surface of the catalyst.

In this manner, the deposit of sulfur components due to excessive sulfur poisoning is removed by executing the temperature increase routine under the PM regeneration control. Accordingly, thereafter, even if the engine operating state immediately after time tl4 in FIG. 9 comes into the sulfur poisoning recovery control execution range such that the sulfur poisoning recovery control increases the temperature and makes the air-fuel ratio the stoichiometric air-fuel ratio or slightly lower, only the sulfur components absorbed in the alkaline metals are released. Accordingly, because the accumulation of sulfur components is not also released, it is possible to suppress the release of a high concentration of sulfur components.

Also, because the frequency with which the temperature increase routine is executed is greater than that of the temperature increase routine under the normal PM regeneration control (in this case, the frequency is more than two times as great), even during the temperature increase routine under the PM regeneration control, the amount of the accumulated sulfur components released each time is less so the concentration of the released sulfur components is able to be suppressed.

As with the related art, when the temperature increase routine under the PM regeneration control is not being performed between times t11 and t14, the amount of accumulated sulfur components increases, as shown by the broken line e. Therefore, when the temperature increase routine and the routine for making the air-fuel ratio the stoichiometric air-fuel ratio or slightly lower are executed by the sulfur poisoning recovery control which is started immediately after time t14, the accumulation of sulfur components is released at the same time that the sulfur components are released from the alkaline metals, such that an extremely high concentration of sulfur components ends up being released.

In the structure described above, the ECU 70 functions as both the excessive sulfur poisoning recovery control method and apparatus for the exhaust gas control catalyst. The sulfur poisoning recovery control executed by the ECU 70 corresponds to the routine executed by the sulfur poisoning recovering means, and the PM regeneration control routine (FIG. 8) and the temperature increase control routine (FIG 6) correspond to the routine executed by the fine particle regeneration controlling means. Further, the calculation "Kst $\times$ Kout $\times$ Ksw" in Expression 6 in step S204 corresponds to the routine executed by the excessive sulfur poisoning amount detecting means. The routine in which the reference accumulation amount PMjddx is reduced by the reference value correction amount Djd in Expressions 5 and 6 in step S204 corresponds to the routine executed by the temperature increasing/sulfur component releasing means.

The following effects can be achieved by the foregoing second exemplary embodiment. (4) When the sulfur poisoning becomes excessive, the sulfur components accumulate up to the filter 38a and the NOx absorption/reduction catalyst 36a, and on occasion, up to the oxidization catalyst 40a. In this case, the frequency with which the lean-burn temperature increase routine (i.e., the temperature increase control in FIG. 6) is executed under the PM regeneration control is increased by the calculations in Expressions 5 and 6, such that the sulfur components accumulated on these exhaust gas control catalysts are released.

As a result, it is possible to prevent a high concentration of sulfur components from being released when the sulfur poisoning amount of an exhaust gas control catalyst such as the filter 38a and the NOx absorption/reduction catalyst 36a, for example, becomes excessive. Accordingly, it is possible to sufficiently minimize white smoke and a foul smell and the like that are produced when a high concentration of sulfur components is released.

(5) In this exemplary embodiment, the reference accumulation amount PMjddx is decreased in order to increase the frequency with which the lean-burn temperature increase routine is executed under the PM regeneration control. The amount of decrease is determined according to the amount of accumulated sulfur components by calculating each of the coefficients Kst, Kout, and Ksw based on the sulfur poisoning amount, the exhaust gas temperature, and the contained sulfur amount, respectively, according to the maps in FIGS. 3 to 5. As a result, the excessive amount of sulfur components is accurately reflected in the reference accumulation amount PMjddx, which enables the frequency with which the lean-burn temperature increase routine is performed to be effectively increased.

(6) The effects described in (3) in the first exemplary embodiment can also be achieved by the foregoing second exemplary embodiment.

[Other Embodiments]

(a) In the first and second exemplary embodiments described above, excessive sulfur components of the sulfur poisoning amount are released from the exhaust gas control catalysts using the PM regeneration control routine. Alternatively, however, the amount of accumulated sulfur components may be calculated using the maps shown in FIGS. 3 to 5 and a separate lean-burn temperature increase routine especially for times when there is excessive sulfur poisoning may be executed when that accumulation amount is equal to, or greater than, a reference level. The lean-burn temperature increase routine itself, in this case, may be executed as described with the temperature increase control routine (FIG. 6), and stopped when the accumulation amount of the sulfur components reaches "0".

(b) In the foregoing exemplary embodiments, the frequency with which the lean-burn temperature increase routine is executed is increased using the engine exhaust amount PMe and based on the calculation "PMe × Kst × Kout × Ksw". Alternatively, however, the amount of fuel injected by the fuel injection valve 58 and the supply valve 68 may be used instead of the engine exhaust amount PMe.

When sulfur components accumulate on an exhaust gas control catalyst (36a, 38a), a PM accumulation amount PMsm is increased and the frequency with which a lean-burn temperature increase routine is executed under fine particle regeneration control is increased (step S 102). As a result, the sulfur components accumulated on the exhaust gas control catalyst (36a, 38a) are released using the lean-burn temperature increase routine of the fine particle regeneration control. Therefore, even when sulfur poisoning is so excessive that the engine operating state does not come into the sulfur poisoning recovery control execution range, the lean-burn temperature increase routine of the fine particle regeneration control can be executed so that the excessive sulfur components on the exhaust gas control catalyst (36a, 38a) can be released by executing this lean-burn temperature increase routine. Because the sulfur components released by executing the lean-burn temperature increase routine are excessive sulfur components that have accumulated on the exhaust gas control catalyst (36a, 38a) and the frequency with which the lean-burn temperature increase routine is executed is high, it is possible to keep down the concentration of sulfur components that are released.

**Claims**

1. An excessive sulfur poisoning recovery control apparatus in an internal combustion engine provided with an exhaust gas control catalyst (36a, 38a) in an exhaust system of the internal combustion engine, and fine particle regeneration controlling means (S210) for purifying particulate matter by means of a lean-burn temperature increase routine for increasing the temperature of the exhaust gas control catalyst (36a, 38a) with an air-fuel ratio higher than the stoichiometric air-fuel ratio if an accumulation amount (PMorg) of the particulate matter in a filter provided in the exhaust system of the internal combustion engine becomes equal to, or greater than, a reference accumulation amount (PMjddx), comprising:

   excessive sulfur poisoning amount detecting means for detecting an excessive sulfur poisoning amount within the sulfur poisoning amount; **characterised by**
   temperature increasing/sulfur component releasing means (S204) which increases the frequency with which the lean-burn temperature increase routine is executed based on the excessive sulfur poisoning amount detected by the excessive sulfur poisoning amount detecting means.

2. The control apparatus according to claim 1, **characterised by** further comprising:
   control means for executing a temperature increase routine for increasing the temperature of the exhaust gas control catalyst (36a, 38a) and an air-fuel ratio decrease routine for decreasing the air-fuel ratio to the stoichiometric air-fuel ratio or lower when the operating state of the internal combustion engine is in a range within which sulfur poisoning recovery control is executed.

3. The control apparatus according to either claim 1 or claim 2, **characterised in that** the control means (S204) increases the accumulation amount of the particulate matter based on the excessive sulfur poisoning amount detected by the excessive sulfur poisoning amount detecting means.

4. The control apparatus according to claim 3, **characterised in that** the control means (S204) increases the accumulation amount of the particulate matter according to the amount of particulate matter produced in the internal combustion engine, the sulfur poisoning amount, the exhaust temperature, and the concentration of sulfur components in the fuel.

5. The control apparatus according to claim 1 or claim 2, **characterised in that** the control means (S204) reduces the reference accumulation amount (PMjddx) based on the excessive sulfur poisoning amount detected by the excessive sulfur poisoning amount detecting means.

6. The control apparatus according to any one of claims 1 to 5, **characterised in that** the control means (S204) executes the lean-burn temperature increase routine of the fine particle regeneration controlling means (S210) before the sulfur component concentration during release of the sulfur components becomes high.

7. The control apparatus according to any one of claims 1 to 6, **characterised in that** fuel is added into the exhaust system of the internal combustion engine.

**Patentansprüche**

1. Vorrichtung zur Steuerung einer Entfernung einer übermäßigen Schwefelvergiftung in einer Brennkraftmaschine, die mit einem Abgassteuerkatalysator (36a, 38a) in einem Abgassystem der Brennkraftmaschine bereitgestellt ist, und mit einem Feinpartikelwiederherstellsteuermittel (S210), um Partikelbestandteile mittels einer Mager-Verbrennungs-Temperaturanstiegsroutine zum Erhöhen der Temperatur des Abgassteuerkatalysators (36a, 38a) mit einem Luft-Kraftstoff-Verhältnis, das höher als das stöchiometrische Luft-Kraftstoff-Verhältnis ist, falls eine Ansammlungsmenge (PMorg) der Partikelbestandteile in einem Filter, der in dem Abgassystem der Brennkraftmaschine bereitgestellt ist, gleich wie oder größer al seine Bezugsanhäufungsmenge (PMjddx) wird, mit:

einem Mittel zum Erfassen einer übermäßigen Schwefelvergiftungsmenge zum Erfassen einer übermäßigen Schwefelvergiftungsmenge innerhalb der Schwefelvergiftungsmenge; **gekennzeichnet durch**
einem Temperaturanstiegs-/Schwefelbestandteilfreisetzungsmittel (S204), das ausgehend von der durch das Mittel zum Erfassen der übermäßigen Schwefelvergiftungsmenge erfassten übermäßigen Schwefelvergiftungsmenge die Frequenz erhöht, mit der die Mager-Verbrennungs-Temperaturanstiegsroutine ausgeführt wird.

2. Steuervorrichtung nach Anspruch 1, **gekennzeichnet durch** außer dem Umfassen von:
einem Steuermittel zum Ausführen einer Temperaturanstiegsroutine zum Erhöhen der Temperatur des Abgassteuerkatalysators (36a, 38a) und einer Luft-Kraftstoff-Verhältnisverringerungsroutine zum Verringern des Luft-Kraftstoff-Verhältnisses auf das stöchiometrische Luft-Kraftstoff-Verhältnis oder niedriger, wenn der Betriebszustand der Brennkraftmaschine sich in einem Bereich befindet, innerhalb von dem eine Schwefelvergiftungswiederherstellungssteuerung ausgeführt wird.

3. Steuervorrichtung nach Anspruch 1 oder Anspruch 2, **dadurch gekennzeichnet, dass** das Steuermittel (S204) die Ansammlungsmenge der Partikelbestandteile ausgehend von der übermäßigen Schwefelvergiftungsmenge erhöht, die durch das Mittel zum Erfassen der übermäßigen Schwefelvergiftungsmenge erfasst wurde.

4. Steuervorrichtung nach Anspruch 3,
**dadurch gekennzeichnet, dass** das Steuermittel (S204) die Ansammlungsmenge der Partikelbestandteile gemäß der Menge der Partikelbestandteile erhöht, die in der Brennkraftmaschine erzeugt werden, der Schwefelvergiftungsmenge, der Abgastemperatur und der Konzentration der Schwefelbestandteile in dem Kraftstoff.

5. Steuervorrichtung nach Anspruch 1 oder Anspruch 2, **dadurch gekennzeichnet, dass** das Steuermittel (S204) die Bezugsanhäufungsmenge (PMjddx) ausgehend von der übermäßigen Schwefelvergiftungsmenge reduziert, die durch das Mittel zum Erfassen der übermäßigen Schwefelvergiftungsmenge erfasst wurde.

6. Steuervorrichtung nach einem der Ansprüche 1 bis 5, **dadurch gekennzeichnet, dass** das Steuermittel (S204) die Mager-Verbrennungs-Temperaturerhöhungsroutine des Feinpartikelwiederherstellungssteuermittels (S210) ausführt, bevor die Schwefelbestandteilkonzentration während der Freisetzung der Schwefelbestandteile hoch wird.

7.  Steuervorrichtung nach einem der Ansprüche 1 bis 6, **dadurch gekennzeichnet, dass** Kraftstoff in das Abgassystem der Brennkraftmaschine hinzugefügt wird.

**Revendications**

1.  Dispositif de commande de restauration après un empoisonnement au soufre excessif dans un moteur à combustion interne doté d'un catalyseur d'épuration de gaz d'échappement (36a, 38a) dans un système d'échappement du moteur à combustion interne, et des moyens de commande de régénération de fines particules (S210) pour purifier des matières particulaires au moyen d'une routine d'augmentation de température de mélange pauvre pour augmenter la température du catalyseur d'épuration de gaz d'échappement (36a, 38a) avec un rapport air/carburant supérieur au rapport air/carburant stoechiométrique si la quantité accumulée (PMorg) des matières particulaires dans un filtre disposé dans le système d'échappement dans le moteur à combustion interne devient égale ou supérieure à une quantité accumulée de référence (PMjddx), comprenant :

    un moyen de détection d'une quantité d'empoisonnement au soufre excessive pour détecter une quantité d'empoisonnement au soufre excessive dans la quantité d'empoisonnement au soufre ;
    **caractérisé par**
    un moyen augmentant la température/libérant des composants soufrés (S204) qui augmente la fréquence à laquelle la routine d'augmentation de température de mélange pauvre est exécutée sur la base de la quantité d'empoisonnement au soufre excessive détectée par le moyen de détection de quantité d'empoisonnement au soufre excessive.

2.  Dispositif de commande selon la revendication 1, **caractérisé en ce qu'**il comprend en outre :
    un moyen de commande pour exécuter une routine d'augmentation de température pour augmenter la température du catalyseur d'épuration de gaz d'échappement (36a, 38a) et une routine de diminution du rapport air-carburant pour diminuer le rapport air-carburant jusqu'au rapport air-carburant stoechiométrique ou jusqu'à un rapport inférieur quand l'état de fonctionnement du moteur à combustion interne est situé dans une plage dans laquelle la commande de restauration après un empoisonnement au soufre est exécutée.

3.  Dispositif de commande selon l'une ou l'autre des revendications 1 et 2, **caractérisé en ce que** le moyen de commande (S204) augmente la quantité accumulée des matières particulaires sur la base de la quantité d'empoisonnement au soufre excessive détectée par le moyen de détection de quantité d'empoisonnement au soufre excessive.

4.  Dispositif de commande selon la revendication 3, **caractérisé en ce que** le moyen de commande (S204) augmente la quantité accumulée des matières particulaires en fonction de la quantité de matières particulaires produites dans le moteur à combustion interne, de la quantité d'empoisonnement au soufre, de la température d'échappement, et de la concentration de composants soufrés dans le carburant.

5.  Dispositif de commande selon la revendication 1 ou la revendication 2, **caractérisé en ce que** le moyen de commande (S204) réduit la quantité accumulée de référence (PMjddx) sur la base de la quantité d'empoisonnement au soufre excessive détectée par le moyen de détection de quantité d'empoisonnement au soufre excessive.

6.  Dispositif de commande selon l'une quelconque des revendications 1 à 5, **caractérisé en ce que** le moyen de commande (S204) exécute la routine d'augmentation de température de mélange pauvre du moyen de commande de régénération de fines particules (S210) avant que la concentration de composants soufrés durant la libération des composants soufrés devienne élevée.

7.  Dispositif de commande selon l'une quelconque des revendications 1 à 6, **caractérisé en ce que** du carburant est ajouté dans le système d'échappement du moteur à combustion interne.

F I G . 1

EGR VALVE

ECU

EP 1 510 679 B1

# FIG.2

```
        ┌──────────────────────────┐
        │   PM REGENERATION        │
        │   CONTROL ROUTINE        │
        └──────────────────────────┘
                     │
                     ▼
        ┌──────────────────────────┐
        │   CALCULATE PM           │
        │   ACCUMULATION AMOUNT    │──S102
        │   PMsm                   │
        └──────────────────────────┘
                     │
                     ▼
                  ╱──────╲   S104
        NO      ╱   IS      ╲
      ◄────────  TEMPERATURE  ────
              ╲ INCREASE CONTROL ╱
       │        ╲ BEING EXECUTED ?╱
       │           ╲──────────╱
       │              │ YES
       ▼              │
    ╱──────╲ S106     │
  NO ╱          ╲     │
 ◄──  PMsm≧PMjd ?     │
     ╲          ╱     │
  │    ╲──────╱       │
  │       │ YES       │
  │       ▼           │
  │  ┌──────────────┐ │
  │  │  EXECUTE     │ │
  │  │  TEMPERATURE │─S108
  │  │INCREASE CONTROL│
  │  └──────────────┘ │
  │       │           │
  └───────┤           │
          │           ▼
          │        ╱──────╲  S110
          │      ╱          ╲    NO
          │      │  PMsm>0 ?  │─────────┐
          │      ╲          ╱           │
          │        ╲──────╱             │
          │           │ YES        S112 │
          │           │                 ▼
          │           │      ┌──────────────────┐
          │           │      │ STOP TEMPERATURE │
          │           │      │ INCREASE CONTROL │
          │           │      └──────────────────┘
          │           │                 │
          │           │                 ▼
          │           │      ┌──────────────────┐
          │           │  S114│    PMsm←0        │
          │           │      └──────────────────┘
          │           │                 │
          └───────────┼─────────────────┘
                      ▼
                 ┌─────────┐
                 │ RETURN  │
                 └─────────┘
```

# FIG.3

S POISONING
COEFFICIENT Kst

1 ┈┈┈┈┈┈┈┈┈┈┈┈┈┈

1

0
0                10               20      S POISONING
                                          AMOUNT (g)

(MAXIMUM
POISONING
AMOUNT)

# FIG.4

EXHAUST
TEMPERATURE
COEFFICIENT Kout

1 ┈┈┈┈┈┈┈┈┈┈┈┈┈┈┈┈┈┈┈┈

1

0
   400              500              600
                                          EXHAUST
                                          TEMPERATURE (°C)

EP 1 510 679 B1

# FIG.5

CONTAINED S
COEFFICIENT Ksw

20

# FIG.6

```
TEMPERATURE INCREASE
   CONTROL ROUTINE
```

SET TARGET BED
TEMPERATURE Ttc — S142

CALCULATE BASE BED
TEMPERATURE Tbc — S144

CALCULATE FUEL
ADDITION AMOUNT fad — S146

RETURN

# FIG. 7

PM ACCUMULATION AMOUNT PMsm

PMjd

PMadd    PMadd

0

TIME

S POISONING AMOUNT

MAXIMUM POISONING AMOUNT

e

S COMPONENT ACCUMULATION

0

t0    t1    t2 t3    t4    TIME

EP 1 510 679 B1

# F I G . 8

$$\boxed{\text{PM REGENERATION CONTROL ROUTINE}}$$

CALCULATE PM ACCUMULATION AMOUNT PMorg —S202

CALCULATE REFERENCE ACCUMULATION AMOUNT PMjddx —S204

S206 IS TEMPERATURE INCREASE CONTROL BEING EXECUTED ?

NO → S208 $PMorg \geq PMjddx$ ?

NO →

YES → EXECUTE TEMPERATURE INCREASE CONTROL —S210

YES → S212 $PMorg > 0$ ?

NO → STOP TEMPERATURE INCREASE CONTROL S214

S216 — $PMorg \leftarrow 0$

S218 — $Djd \leftarrow 0$

YES →

RETURN

# FIG.9

EP 1 510 679 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001349230 A

- DE 10024845